# EUROPEAN PATENT APPLICATION

(11) **EP 4 159 292 A1**
(43) Date of publication of application: **05.04.2023**
(21) Application number: 22800054.3
(22) Date of filing: 11.05.2022
(51) Int. Cl.: A63F 13/285

(54) **VIBRATION OUTPUT METHOD AND RELATED APPARATUS**

(30) Priority: 31.08.2021 CN 202111015822; 12.08.2021 CN 202110927059
(71) Applicant: Honor Device Co., Ltd., Shenzhen, Guangdong 518040 (CN)
(72) Inventor: ZHU, Jianwei, Guangdong 518040 (CN); HUANG, Song, Guangdong 518040 (CN)
(74) Representative: Maiwald GmbH
(86) International application number: PCT/CN2022/092283
(87) International publication number: WO 2023/016001

(57) **Abstract**

This application discloses a vibration output method and a related apparatus, and relates to the field of terminals. The method includes: An electronic device may obtain a first vibration description file of an application, where the first vibration description file may include one or more vibration frequencies and vibration duration corresponding to each vibration frequency; the electronic device may determine, based on the vibration frequency and the vibration duration corresponding to each vibration frequency, a first vibration identifier corresponding to the first vibration description file; when the electronic device determines that first drive waveform data corresponding to the first vibration identifier exists in local storage space, the electronic device may directly obtain the first drive waveform data from the local storage space, and does not need to determine through calculation, based on the first vibration description file, the first drive waveform data; and then the electronic device may output, by using a motor, a corresponding vibration response based on the first drive waveform data.

## Description

This application claims priority to Chinese Patent Application No. 202110927059.5, filed with the China National Intellectual Property Administration on August 12, 2021 and entitled "VIBRATION OUTPUT METHOD AND RELATED APPARATUS", and priority to Chinese Patent Application No. 202111015822.3, filed with the China National Intellectual Property Administration on August 31, 2021 and entitled "VIBRATION OUTPUT METHOD AND RELATED APPARATUS", which are incorporated herein by reference in their entireties.

### TECHNICAL FIELD

This application relates to the field of terminals, and in particular, to a vibration output method and a related apparatus.

### BACKGROUND

With development of terminal technologies, electronic devices are increasingly used in daily life. In particular, varied applications on electronic devices, such as some game applications, add much fun to life.

Currently, when the electronic device runs a specified application (for example, a game application), the specified application may output a vibration response by using the electronic device held by a user, to give the user a prompt or provide a more immersive sensory experience for the user. However, in a process in which the electronic device runs the specified application, when CPU load is relatively high, a CPU resource cannot process vibration data of relatively long duration in a timely manner. Consequently, when the specified application runs, a frame rate is lower than a specified threshold, causing phenomena of frame drop and application freezing, and causing very poor user experience.

### SUMMARY

This application provides a vibration output method and a related apparatus, to enable an electronic device to obtain, based on a vibration identifier determined from a vibration description file, corresponding drive waveform data from local storage space, and drive, based on the drive waveform data, a motor to output a corresponding vibration response. In this way, the electronic device may not need to generate through calculation, based on the vibration description file, the corresponding drive waveform data. This saves a CPU resource and improves vibration output efficiency, so that application freezing caused by frame drop is avoided.

According to a first aspect, this application provides a vibration output method. The method includes: An electronic device obtains a first vibration description file of an application. The electronic device determines a first vibration identifier based on the first vibration description file. When the electronic device determines, based on the first vibration identifier, that first drive waveform data corresponding to the first vibration identifier is stored in local storage space, the electronic device drives, based on the first drive waveform data, a motor to output a first vibration response. In this way, the electronic device may not need to generate through calculation, based on a vibration description file, corresponding drive waveform data. This saves a CPU resource and improves vibration output efficiency, so that application freezing caused by frame drop is avoided.

In a possible implementation, the method further includes: When the electronic device determines, based on the first vibration identifier, that the first drive waveform data does not exist in the local storage space, the electronic device generates the first drive waveform data based on the first vibration description file. The electronic device stores the first vibration identifier and the first drive waveform data in the local storage space. The electronic device drives, based on the first drive waveform data, the motor to output the first vibration response. In this way, the electronic device stores the first vibration identifier and the first drive waveform data. Subsequently, when obtaining the first vibration identifier again, the electronic device may directly obtain the first drive waveform data, and does not need to generate through calculation, based on the first vibration description file, the first drive waveform data. This saves the CPU resource and improves the vibration output efficiency, so that application freezing caused by the frame drop is avoided.

In a possible implementation, that the electronic device stores the first vibration identifier and the first drive waveform data in the local storage space specifically includes: When the electronic device determines that a quantity of drive waveform data stored in the local storage space is less than a first quantity, the electronic device stores the first vibration identifier and the first drive waveform data in the local storage space. In this way, a vibration identifier and drive waveform data can be stored more efficiently.

In a possible implementation, that the electronic device stores the first vibration identifier and the first drive waveform data specifically includes: When the electronic device determines that a quantity of drive waveform data stored in the local storage space is equal to a first quantity, the electronic device clears, from the drive waveform data stored in the local storage space, second drive waveform data and a second vibration identifier corresponding to the second drive waveform data. The electronic device stores the first vibration identifier and the first drive waveform data in the local storage space. In this way, a vibration identifier and drive waveform data can be stored more efficiently.

In a possible implementation, the first vibration description file includes total vibration duration of the first vibration response. Before the electronic device determines, based on the first vibration identifier, that the first drive waveform data corresponding to the first vibration identifier is stored in the local storage space, the method includes: When the electronic device determines that the total vibration duration of the first vibration response is greater than first preset duration, the electronic device determines, based on the first vibration identifier, whether the first drive waveform data is stored in the local storage space. In this way, the electronic device determines, based on whether vibration duration is greater than preset duration, whether the drive waveform data is obtained based on the vibration identifier. This saves the CPU resource and improves the vibration output efficiency, so that application freezing caused by the frame drop is avoided.

In a possible implementation, that the electronic device determines, based on the first vibration description file, the first vibration identifier corresponding to the first vibration description file specifically includes: The first vibration description file includes one or more vibration frequencies and vibration duration corresponding to each vibration frequency. The electronic device calculates the first vibration identifier corresponding to the first vibration description file based on a first algorithm, the one or more vibration frequencies, and the vibration duration corresponding to each vibration frequency.

In a possible implementation, the first vibration description file includes the first vibration identifier. That the electronic device determines, based on the first vibration description file, the first vibration identifier corresponding to the first vibration description file specifically includes: The electronic device obtains the first vibration identifier from the first vibration description file.

In a possible implementation, the second drive waveform data is drive waveform data with a lowest invocation frequency in the local storage space.

In a possible implementation, the second drive waveform data is drive waveform data first stored in the local storage space.

In a possible implementation, the local storage space is an operating memory and/or a disk in the electronic device.

In a possible implementation, the first vibration identifier is a vibration identifier corresponding to the first vibration description file.

According to a second aspect, an embodiment of this application provides an electronic device. The electronic device includes one or more processors, one or more memories, a motor, and a transceiver. The one or more memories are coupled to the one or more processors, the one or more memories are configured to store computer program code, and the computer program code includes a computer instruction. When the one or more processors execute the computer instruction, the electronic device is enabled to perform the method according to any one of the possible implementations of the first aspect. In this way, a CPU resource is saved, and vibration output efficiency is improved, so that application freezing caused by frame drop is avoided.

According to a third aspect, an embodiment of this application provides a computer readable storage medium, including a computer instruction. When the computer instruction is run on an electronic device, the electronic device is enabled to perform the method according to any one of the possible implementations of the first aspect. In this way, a CPU resource is saved, and vibration output efficiency is improved, so that application freezing caused by frame drop is avoided.

According to a fourth aspect, an embodiment of this application provides a computer program product. When the computer program product is run by an electronic device, the electronic device is enabled to perform the method according to any one of the possible implementation manners of the first aspect. In this way, a CPU resource is saved, and vibration output efficiency is improved, so that application freezing caused by frame drop is avoided.

### BRIEF DESCRIPTION OF DRAWINGS

FIG. 1 is a schematic diagram of a hardware structure of an electronic device 100 according to an embodiment of this application;
FIG. 2A to FIG. 2D are schematic diagrams of a group of user interfaces according to an embodiment of this application;
FIG. 2E is a schematic diagram of a quantity of frames according to an embodiment of this application;
FIG. 3A-FIG. 3B are a schematic flowchart of a vibration output method according to an embodiment of this application; and
FIG. 4 is a schematic diagram of a software architecture according to an embodiment of this application.

### DESCRIPTION OF EMBODIMENTS

Terms used in the following embodiments of this application are merely intended for the purpose of describing specific embodiments, but not intended to limit this application. As used in the specification and the accompanying claims of this application, the terms "one", "a type of', "the", "foregoing", "said", and "this" of singular forms are also intended to include plural forms, unless otherwise explicitly indicated in the context. It should be further understood that the term "and/or" used in this application refers to any or all possible combinations of one or more listed items. In this embodiment of this application, the terms "first" and "second" are used only for description purposes, and cannot be construed as an implication or implication of relative importance or implicit indication of a quantity of indicated technical features. Therefore, features defined with "first" and "second" may explicitly or implicitly include one or more of such features. In the descriptions of the embodiments of this application, unless otherwise stated, "a plurality of" means two or more.

First, an electronic device 100 provided in an embodiment of this application is described.

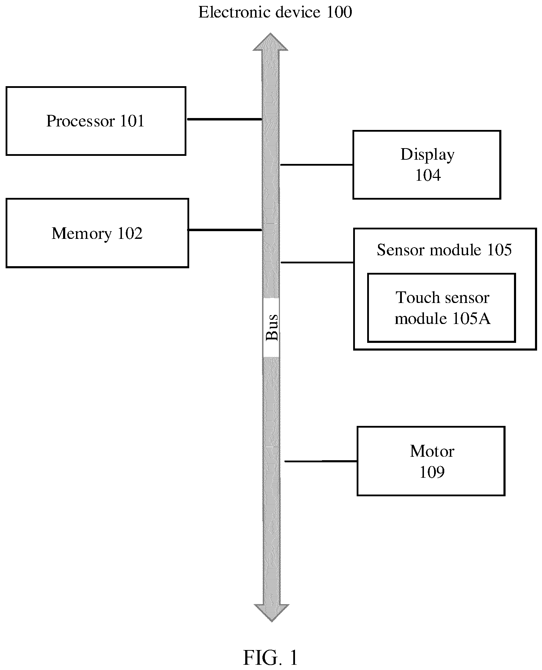

FIG. 1 shows a schematic diagram of an example of a hardware structure of an electronic device 100 according to an embodiment of this application.

As shown in FIG. 1, the electronic device 100 may be an electronic device such as a mobile phone, a tablet computer, a PC, an ultra-mobile personal computer (ultra-mobile personal computer, UMPC), a netbook, and a personal digital assistant (personal digital assistant, PDA). A specific type of the electronic device is not particularly limited in this embodiment of this application.

The electronic device 100 may include a processor 101, a memory 102, a display 104, a sensor module 105, a motor 109, and the like. The foregoing modules may be connected by using a bus or in another manner. In this embodiment of this application, connection by using a bus is used as an example.

It may be understood that a structure shown in this embodiment of this application does not constitute a specific limitation on the electronic device 100. In some other embodiments of this application, the electronic device 100 may further include more or fewer components than those shown in the figure, or may combine some components, or may split some components, or may have different component arrangements. The illustrated components may be implemented by using hardware, software or a combination of software and hardware.

The processor 101 may include one or more processor units. For example, the processor 101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller can generate an operation control signal based on instruction operation codes and a timing signal, and complete the control of fetching and executing instructions.

The processor 101 may be further provided with a memory for storing instructions and data. In some embodiments, the memory in the processor 101 is a cache. The memory can store an instruction or data that the processor 101 has just used or used cyclically. If the processor 101 needs to use the instruction or data again, the instruction or data can be directly invoked from the memory. Repeated access is avoided, and a waiting time of the processor 101 is reduced, thereby improving system efficiency.

In some embodiments, the processor 101 may include one or more interfaces. The interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a USB interface, and/or the like.

The memory 102 is coupled to the processor 101, and is configured to store various software programs and/or a plurality of groups of instructions. In specific implementation, the memory 102 may include a volatile memory (volatile memory) such as a random access memory (random access memory, RAM), and may also include a non-volatile memory (non-volatile memory) such as a ROM, a flash memory (flash memory), a hard disk drive (Hard Disk Drive, HDD), or a solid state drives (Solid State Drives, SSD). The memory 102 may further include a combination of the foregoing types of memories. The memory 102 may further store some program code, so that the processor 101 can easily invoke the program code stored in the memory 102, to implement the method for implementing the electronic device 100 in this embodiment of this application. The memory 102 may store an operating system, for example, an embedded operating system such as uCOS, VxWorks, or RTLinux.

The display 104 may be configured to display an image, a video, and the like. The display 104 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini LED, a micro LED, a micro-OLED, a quantum dot light emitting diode (quantum dot light emitting diodes, QLED), or the like. In some embodiments, the electronic device 100 may include one or N displays 104, where N is a positive integer greater than 1.

The sensor module 105 may include a touch sensor module 105A and the like. The touch sensor module 105A may also be referred to as a "touch device". The touch sensor module 105A may be disposed in the display 104, and the touch sensor module 105A and the display 104 constitute a touchscreen. The touch sensor module 105A may be configured to detect a touch operation performed on or near the touch sensor module 105A. Optionally, the sensor module 105 may further include a gyro sensor (not shown in FIG. 1), an acceleration sensor (not shown in FIG. 1), and the like. The gyro sensor may be configured to determine a moving posture of the electronic device 100. In some embodiments, the electronic device 100 may determine angular velocities of the electronic device 100 on three axes (namely, x, y, and z axes) by using the gyro sensor. The acceleration sensor may be configured to detect an acceleration of the electronic device 100 in each direction (usually on x, y, and z axes). The acceleration sensor can detect a value and a direction of gravity when the electronic device 100 is still.

The motor 109 can generate a vibration prompt. The motor 109 may be configured to provide an incoming call vibration prompt, or may be configured to provide a touch vibration feedback. For example, touch operations performed on different applications (for example, photographing and audio playing) may correspond to different vibration feedback effects. The motor 109 may correspond to different vibration feedback effects when touch operations are performed on different areas of the display 104. Different application scenarios (for example, a time reminder, message receiving, an alarm clock, and a game) may also correspond to different vibration feedback effects. A touch vibration feedback effect may further be customized.

It should be noted that FIG. 1 is merely used as an example for interpretation of this application, and should not constitute a specific limitation on this application.

**Next, a vibration output procedure provided in an embodiment of this application is described with reference to an application scenario.**

In some application scenarios, an electronic device 100 may receive one or more pieces of vibration data of an application. The electronic device 100 may process the one or more pieces of vibration data in a specified order (for example, in a chronological order in which the one or more pieces of vibration data are obtained). The electronic device 100 may generate, based on the vibration data, a drive waveform corresponding to each piece of vibration data. The electronic device 100 may output, by using a motor, a vibration response based on the drive waveform.

However, in a process in which the electronic device runs a specified application, when CPU load is relatively high, a CPU resource cannot process vibration data of relatively long duration in a timely manner. Consequently, when the specified application runs, a frame rate is lower than a specified threshold, causing phenomena of frame drop and application freezing, and causing very poor user experience.

For example, a game application scenario is used as an example, and the application may be a game application. The electronic device 100 may receive input 1 performed by a user on the game application. In response to the input 1, the electronic device 100 may run the game application, and display a game interface of the game application on a display of the electronic device 100. In a process in which the user controls a target object on the game interface to play a game, the electronic device 100 may receive and respond to input 2 of the user, to obtain one or more pieces of vibration data of the game application. The electronic device 100 may process the one or more pieces of vibration data in the specified order (for example, in a chronological order in which the vibration data is obtained), to generate the drive waveform corresponding to each piece of vibration data. The electronic device 100 may output, by using a motor, a vibration response based on the drive waveform.

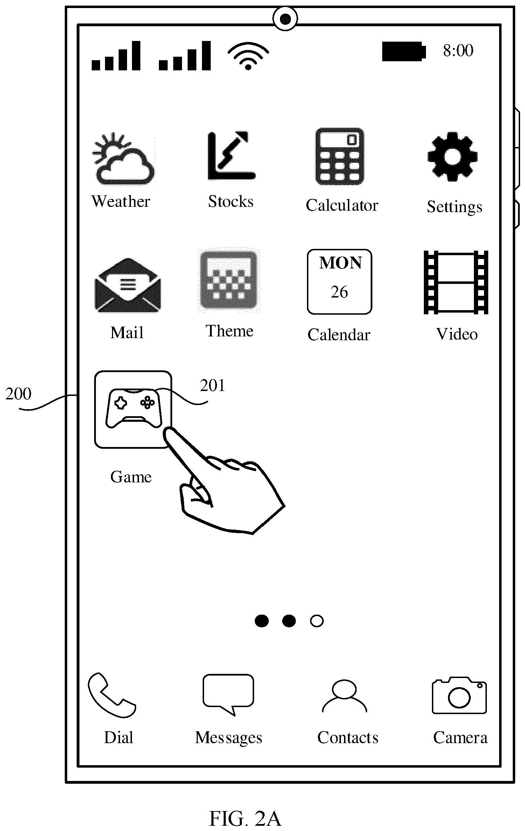

As shown in FIG. 2A, the electronic device 100 may display a home screen 200. The home screen 200 may display one or more application icons. The one or more application icons may include a weather application icon, a stocks application icon, a calculator application icon, a settings application icon, a mail application icon, a theme application icon, a music application icon, a video application icon, a game application icon 201 corresponding to the game application, and the like.

Optionally, the home screen 200 may further display a status bar, a page indicator, and a tray icon area. The status bar may include one or more signal strength indicators of a mobile communication signal (which may also be referred to as a cellular signal), a signal strength indicator of a wireless fidelity (wireless fidelity, Wi-Fi) signal, a battery status indicator, a time indicator, and the like. The page indicator may be used to indicate a position relationship between a currently displayed page and another page. The tray icon area may include a plurality of tray icons (for example, a dial application icon, a messages application icon, a contacts application icon, and a camera application icon). The tray icons remain displayed during page switching. The foregoing page may also include a plurality of application icons and page indicators. The page indicator may not be a part of the page, the page indicator may exist separately, and the tray icon is also optional. This is not limited in this application.

The electronic device 100 may receive a touch operation (which may also be referred to as the input 1, for example, a tap) performed by the user on the game application icon 201. In response to the touch operation, the electronic device 100 may display a game interface corresponding to the game application.

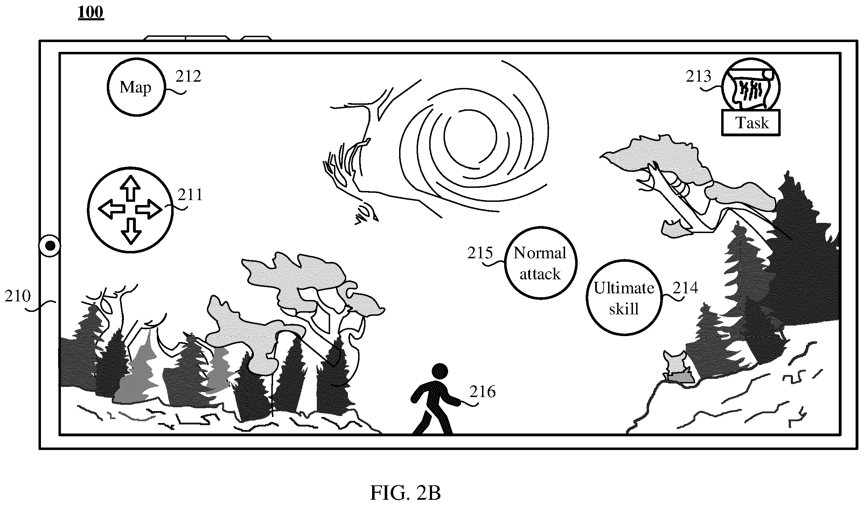

As shown in FIG. 2B, the electronic device 100 may display the game interface 210. The game interface 210 may include a game picture, one or more controls (for example, a direction control 211, a map control 212, a task control 213, an ultimate skill control 214, a normal attack control 215, and the like), and the target object 216. The direction control 211 may be used to receive a touch operation (for example, a tap) performed by the user on an area of the control. In response to the touch operation, the electronic device 100 may display a movement of the target object 216 in a corresponding direction (for example, up, down, left, or right). The target object 216 is a subject that is operated in the game application. The ultimate skill control 214 and the normal attack control 215 may receive a touch operation (for example, a tap) performed by the user on the control. In response to the touch operation, the electronic device 100 may display a picture where the target object 216 plays a corresponding skill.

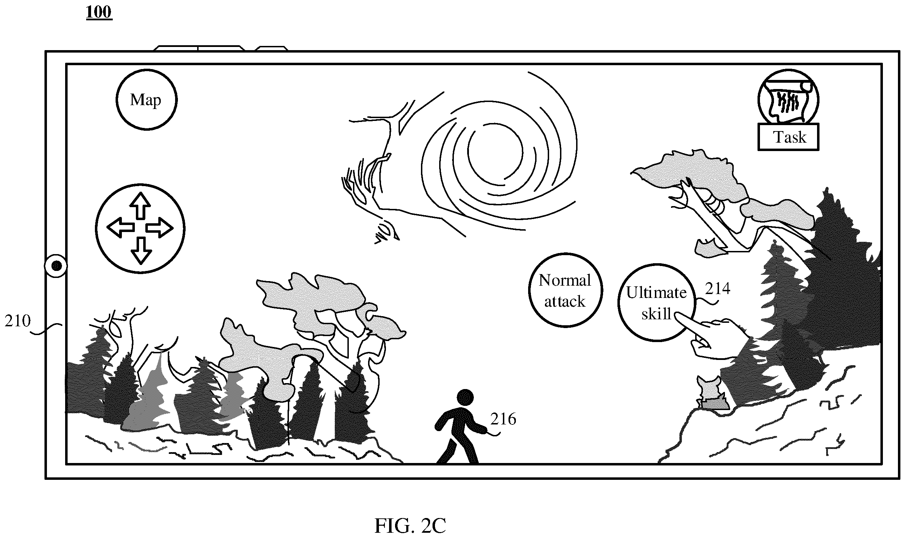

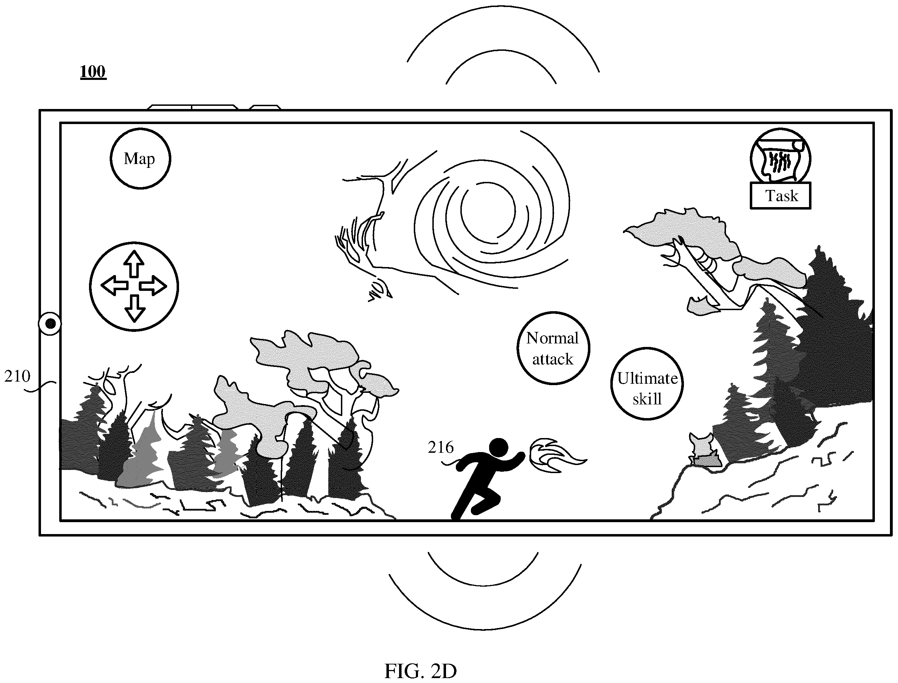

As shown in FIG. 2C and FIG. 2D, the electronic device 100 may receive a touch operation (for example, a tap) performed by the user on the ultimate skill control 214. In response to the touch operation, the electronic device 100 may display on the game interface 210, a game picture where the target object 216 plays an ultimate skill. In addition, in this process, the electronic device 100 may receive and respond to the touch operation (also referred to as the input 2) performed by the user on the ultimate skill control 214, and obtain the one or more pieces of vibration data of the game application. The electronic device 100 may process the one or more pieces of vibration data in the specified order (for example, in a chronological order in which the vibration data is obtained), to generate the drive waveform corresponding to each piece of vibration data. The electronic device 100 may output, by using a motor, a vibration response based on the drive waveform.

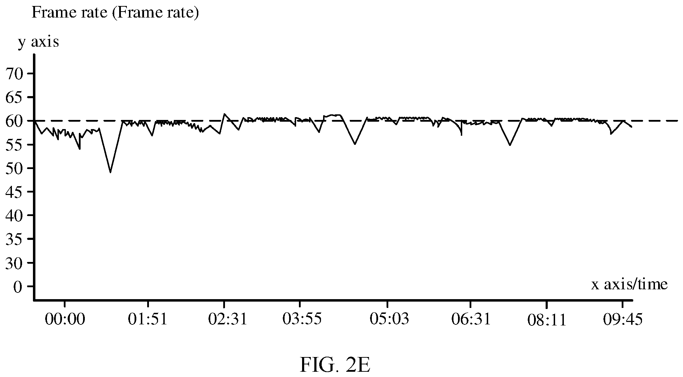

However, as can be seen from the foregoing process, in a process in which the user plays the game, when CPU load is relatively high, a CPU resource cannot process vibration data of relatively long duration in a timely manner. Consequently, when the game is running, the frame rate is lower than the specified threshold (for example, 60 frames per second), causing the phenomena of frame drop and game freezing. For example, the electronic device 100 may test a frame rate in this scenario by using a specified test tool (for example, a PerfDog testing tool), to obtain a frame rate view shown in FIG. 2E. The frame rate view uses 60 frames per second as the specified threshold, a Y axis represents a frame rate value, and an X axis represents a time value. It can be learned from the foregoing frame rate view shown in the frame rate view 2E that when the CPU resource cannot process the vibration data of relatively long duration in a timely manner, when the game is running, the frame rate is usually lower than 60 frames per second, causing frame drop of the game, and causing game freezing.

**Therefore, an embodiment of this application provides a vibration output method.**

An electronic device 100 may obtain a vibration description file 1 of an application (for example, a game application, a video application, a music application, and a shopping application). The vibration description file 1 may include one or more vibration frequencies and vibration duration corresponding to each vibration frequency. The electronic device 100 may determine, based on the vibration frequency and the vibration duration corresponding to each vibration frequency, a vibration identifier 1 corresponding to the vibration description file 1. For example, the electronic device 100 may calculate, based on the vibration frequency, the vibration duration corresponding to each vibration frequency, and a specified algorithm (for example, a cyclic redundancy check (cyclic redundancy check, CRC) 32 encryption algorithm or a message-digest algorithm 5 (message-digest algorithm 5, MD5)), the vibration identifier 1 corresponding to the vibration description file 1. When the electronic device 100 determines that drive waveform data 1 corresponding to the vibration identifier 1 exists in local storage space, the electronic device 100 may directly obtain the drive waveform data 1 from the local storage space, and does not need to determine through calculation, based on the vibration description file 1, the drive waveform data 1. Then, the electronic device 100 may output, by using a motor, a corresponding vibration response based on the drive waveform data 1.

In this way, the electronic device 100 may generate corresponding drive waveform data 1 without processing the vibration description file 1, but obtain, based on the vibration identifier 1 corresponding to the vibration description file 1, the corresponding drive waveform data 1 from the local storage space. This saves a CPU resource and improves vibration output efficiency. Therefore, when the application (for example, the game application, the video application, the music application, and the shopping application) is running, a frame rate is not lower than a specified threshold (for example, 60 frames per second), so that application freezing caused by frame drop is avoided.

**The following describes a vibration output method provided in an embodiment of this application.**

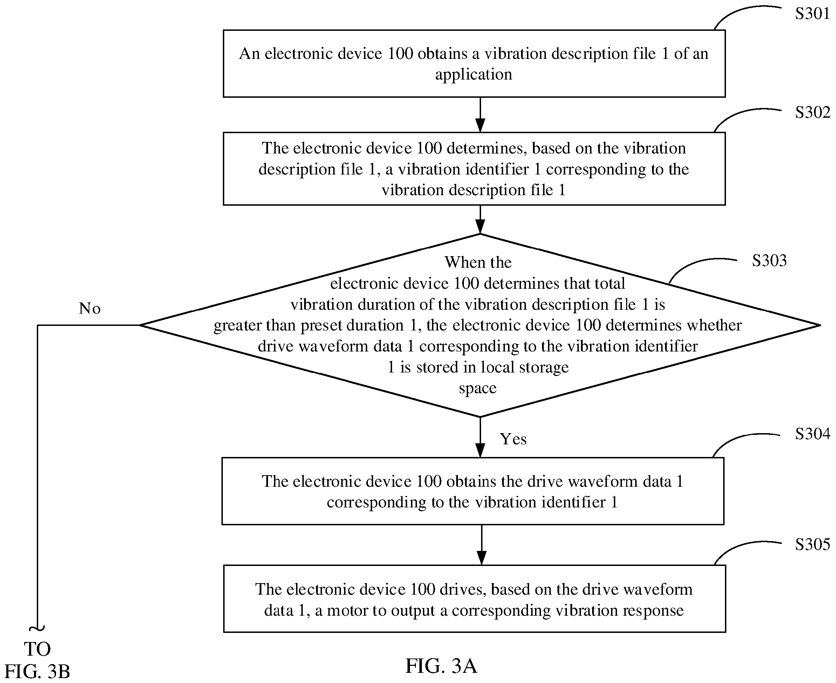

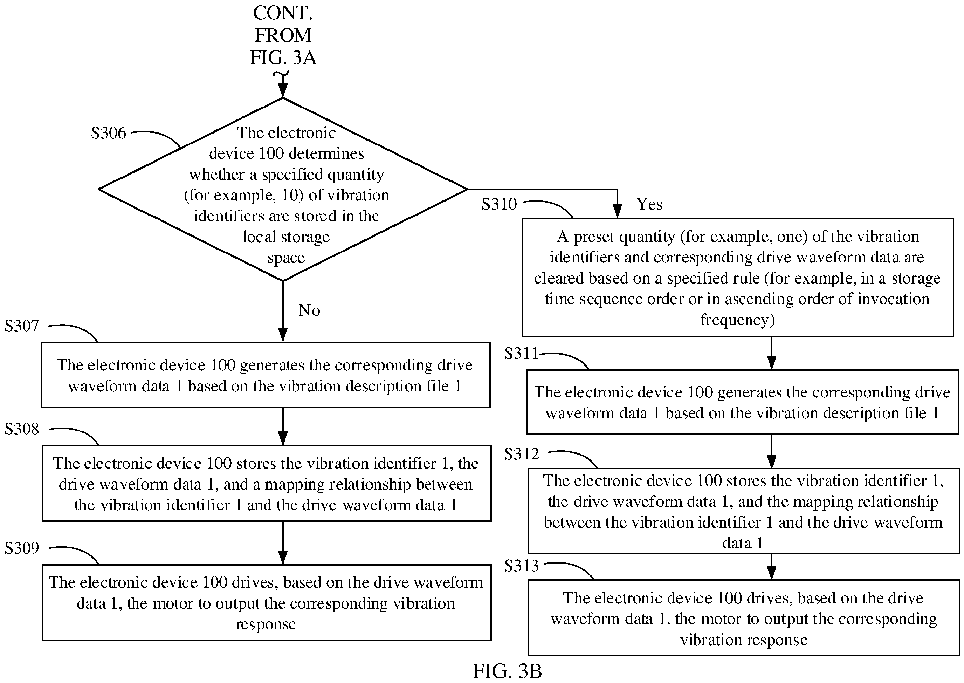

FIG. 3-FIG. 3B show a specific flowchart of an example of a vibration output method according to an embodiment of this application.

S301: An electronic device 100 obtains a vibration description file 1 (which may also be referred to as a first vibration description file) of an application.

Specifically, the vibration description file 1 may include total vibration duration corresponding to the vibration description file, one or more vibration frequencies, and vibration duration corresponding to each vibration frequency. The electronic device 100 may obtain, based on a specified scenario in the application, the vibration description file 1. The electronic device 100 may also receive input performed by a user on a specified control. In response to the input, the electronic device 100 may obtain the vibration description file 1 based on an identifier of the specified control. This application sets no limitation thereto.

For example, a game application scenario is used as an example, and the application may be a game application. A mapping relationship between a vibration description file of the game application and a game scenario or a game control may be as shown in Table 1.

**Table 1**

| | |
|---|---|
| Vibration description file 1 | "Ultimate skill" control |
| Vibration description file 2 | "Normal attack" control |
| Vibration description file 3 | Rainy day scenario |
| ... | |

It may be learned from Table 1 that in this game application, the "ultimate skill" control corresponds to the vibration description file 1, that is, when the electronic device 100 receives a touch operation (for example, a tap) performed by the user on the "ultimate skill" control, in response to the touch operation, the electronic device 100 may obtain the vibration description file 1. The "normal attack" control may correspond to the vibration description file 2, that is, when the electronic device 100 receives a touch operation (for example, a tap) performed by the user on the "normal attack" control, in response to the touch operation, the electronic device 100 may obtain the vibration description file 2. The rainy day scenario in the game application corresponds to the vibration description file 3, that is, when the electronic device 100 detects that the game application displays a game interface of the rain-day scenario, the electronic device 100 may obtain the vibration description file 3.

It should be noted that Table 1 is merely used as an example for interpretation of this application. In specific implementation, Table 1 may include more or fewer vibration description files and game controls or game scenarios corresponding to the vibration description files. This application sets no limitation thereto.

In a possible implementation, the vibration description file such as the vibration description file 1, the vibration description file 2, and the vibration description file 3 may be stored in a storage area of the application, that is, the electronic device 100 may obtain, by using the application, a specified vibration description file based on an identified specified scenario and/or in response to received input performed by the user on the specified control. In another possible implementation, the vibration description file such as the vibration description file 1, the vibration description file 2, and the vibration description file 3 may be stored in a storage area that is different from the storage space corresponding to the application, that is, the electronic device 100 may obtain, from the storage area, the specified vibration description file based on the identified specified scenario and/or in response to the received input performed by the user on the specified control. In another possible implementation, the vibration description file such as the vibration description file 1, the vibration description file 2, and the vibration description file 3 may be stored in a cloud server, that is, the electronic device 100 may obtain, from the cloud server, the specified vibration description file based on the identified specified scenario and/or in response to the received input performed by the user on the specified control. This application sets no limitation thereto.

The electronic device 100 may receive input 1 performed by a user on the game application. In response to the input 1, the electronic device 100 may display a game interface 1. For a user interface shown in the foregoing process, refer to the foregoing description of the embodiment shown in FIG. 2A and FIG. 2B. Details are not described herein again. The electronic device 100 may receive a touch operation (which may also be referred to as input 2, for example, a tap) performed by the user on the "ultimate skill" control. In response to the touch operation, the electronic device 100 may obtain a vibration description file 1 corresponding to the "ultimate skill" control. For a user interface shown in the foregoing process, refer to the foregoing description of the embodiments shown in FIG. 2C and 2D. Details are not described herein again.

The vibration description file 1 may include the total vibration duration corresponding to the vibration description file 1, a plurality of vibration frequencies, and the vibration duration of each vibration frequency, as shown in Table 2.

**Table 2**

| Total duration | Vibration frequency | Vibration duration |
|---|---|---|
| 1 second | 150 Hz | 0 milliseconds to 250 milliseconds |
| 1 second | 250 Hz | 250 milliseconds to 500 milliseconds |
| 1 second | 500 Hz | 500 milliseconds to 750 milliseconds |
| 1 second | 250 Hz | 750 milliseconds to 1 second |

It may be learned from Table 2 that the total vibration duration corresponding to the vibration description file 1 may be 1 second. During a time period from 0 milliseconds to 250 milliseconds, the vibration frequency is 150 Hz. During a time period from 250 milliseconds to 500 milliseconds, the vibration frequency is 250 Hz. During a time period from 500 milliseconds to 750 milliseconds, the vibration frequency is 500 Hz. During a time period from 750 milliseconds to 1 second, the vibration frequency is 250 Hz.

It should be noted that Table 2 is merely used as an example to describe this application, and should not constitute a specific limitation on this application.

S302: The electronic device 100 determines, based on the vibration description file 1, a vibration identifier 1 (which may also be referred to as a first vibration identifier) corresponding to the vibration description file 1.

Specifically, the electronic device 100 may determine, based on the one or more vibration frequencies and the vibration duration corresponding to each vibration frequency in the vibration description file 1, the vibration identifier corresponding to the vibration description file 1. For example, the electronic device 100 may calculate, by using a specified algorithm (which may also be referred to as a first algorithm, for example, a CRC32 algorithm or an MD5 algorithm), the vibration identifier 1 corresponding to the vibration description file 1 based on the one or more vibration frequencies and the vibration duration corresponding to each vibration frequency in the vibration description file 1. A specific value of the vibration identifier 1 may be a specified byte (for example, 6 bytes or 8 bytes).

For example, the vibration description file 1 shown in Table 2 is used as an example. A data code stream of the vibration description file 1 may be, for example, "100101011100011010001000100... ". Using the data code stream as an input, the electronic device 100 may calculate, based on the CRC32 algorithm, the vibration identifier 1 corresponding to the vibration description file 1. A specific value of the vibration identifier 1 may be "EF54060D".

S303: When the electronic device 100 determines that the total vibration duration of the vibration description file 1 is greater than preset duration 1 (which may also be referred to as first preset duration, for example, 100 milliseconds), the electronic device 100 determines, based on the vibration identifier 1, whether drive waveform data 1 corresponding to the vibration identifier 1 is stored in local storage space.

Specifically, before the electronic device 100 determines whether the drive waveform data 1 corresponding to the vibration identifier 1 is stored in the local storage space, vibration identifiers corresponding to a specified quantity (for example, 10) of vibration description files and drive waveform data corresponding to the vibration identifiers may be stored in the electronic device 100.

For example, a mapping relationship between the vibration description file and the vibration identifier may be as shown in Table 3.

**Table 3**

| | |
|---|---|
| Vibration description file 1 | Vibration identifier 1 |
| Vibration description file 2 | Vibration identifier 2 |
| Vibration description file 3 | Vibration identifier 3 |
| Vibration description file 4 | Vibration identifier 4 |
| Vibration description file 5 | Vibration identifier 5 |
| Vibration description file 6 | Vibration identifier 6 |
| Vibration description file 7 | Vibration identifier 7 |
| Vibration description file 8 | Vibration identifier 8 |
| Vibration description file 9 | Vibration identifier 9 |
| Vibration description file 10 | Vibration identifier 10 |
| ... | |

It may be learned from Table 3 that the vibration description file 1 corresponds to the vibration identifier 1, the vibration description file 2 corresponds to the vibration identifier 2, the vibration description file 3 corresponds to the vibration identifier 3, the vibration description file 4 corresponds to the vibration identifier 4, the vibration description file 5 corresponds to the vibration identifier 5, the vibration description file 6 corresponds to the vibration identifier 6, the vibration description file 7 corresponds to the vibration identifier 7, the vibration description file 8 corresponds to the vibration identifier 8, the vibration description file 9 corresponds to the vibration identifier 9, the vibration description file 10 corresponds to the vibration identifier 10, and the like.

It should be noted that Table 3 is merely used as an example to describe this application, and should not constitute a specific limitation on this application.

For example, the local storage space of the electronic device 100 may store 10 vibration identifiers and drive waveform data corresponding to each vibration identifier. The vibration identifiers and the drive waveform data corresponding to the vibration identifiers that are stored in the local storage space of the electronic device 100 may be as shown in Table 4.

**Table 4**

| | |
|---|---|
| Vibration identifier 1 | Drive waveform data 1 |
| Vibration identifier 2 | Drive waveform data 2 |
| Vibration identifier 3 | Drive waveform data 3 |
| Vibration identifier 4 | Drive waveform data 4 |
| Vibration identifier 5 | Drive waveform data 5 |
| Vibration identifier 6 | Drive waveform data 6 |
| Vibration identifier 7 | Drive waveform data 7 |
| Vibration identifier 8 | Drive waveform data 8 |
| Vibration identifier 9 | Drive waveform data 9 |
| Vibration identifier 10 | Drive waveform data 10 |

It may be learned from Table 4 that the storage space of the electronic device 100 stores the vibration identifier 1 corresponding to the vibration description file 1 and the drive waveform data 1 corresponding to the vibration identifier 1, the vibration identifier 2 corresponding to the vibration description file 2 and the drive waveform data 2 corresponding to the vibration identifier 2, the vibration identifier 3 corresponding to the vibration description file 3 and the drive waveform data 3 corresponding to the vibration identifier 3, the vibration identifier 4 corresponding to the vibration description file 4 and the drive waveform data 4 corresponding to the vibration identifier 4, the vibration identifier 5 corresponding to the vibration description file 5 and the drive waveform data 5 corresponding to the vibration identifier 5, the vibration identifier 6 corresponding to the vibration description file 6 and the drive waveform data 6 corresponding to the vibration identifier 6, the vibration identifier 7 corresponding to the vibration description file 7 and the drive waveform data 7 corresponding to the vibration identifier 7, the vibration identifier 8 corresponding to the vibration description file 8 and the drive waveform data 8 corresponding to the vibration identifier 8, the vibration identifier 9 corresponding to the vibration description file 9 and the drive waveform data 9 corresponding to the vibration identifier 9, the vibration identifier 10 corresponding to the vibration description file 10 and the drive waveform data 10 corresponding to the vibration identifier 10, and the like.

It should be noted that Table 4 is merely used as an example to describe this application, and should not constitute a specific limitation on this application.

S304: When the electronic device 100 determines that the drive waveform data 1 exists in the local storage space, the electronic device 100 obtains the drive waveform data 1 (which may also be referred to as first drive waveform data) corresponding to the vibration identifier 1.

In some embodiments, the local storage space may be an operating memory of the electronic device 100. When the local storage space is an operating memory of the electronic device 100, the electronic device 100 may more quickly read the drive waveform data 1 from the local storage space, so that running efficiency of the electronic device 100 is improved. In some embodiments, the local storage space may be a disk in the electronic device 100. When the local storage space is a disk in the electronic device 100, the local storage space may store more drive waveform data and a vibration identifier corresponding to each piece of drive waveform data.

S305: The electronic device 100 drives based on the drive waveform data 1, a motor to output a corresponding vibration response (which may also be referred to as a first vibration response).

S306: When the electronic device 100 determines that the drive waveform data 1 corresponding to the vibration identifier 1 does not exist in the local storage space, the electronic device 100 determines whether the specified quantity (for example, 10) of the vibration identifiers are stored in the local storage space.

S307: When the electronic device 100 determines that the vibration identifiers and the corresponding drive waveform data in the local storage space are less than the specified quantity (which may also be referred to as a first quantity, for example, 10), the electronic device 100 generates the corresponding drive waveform data 1 based on the vibration description file 1.

For example, the local storage space of the electronic device 100 may store the 10 vibration identifiers and the drive waveform data corresponding to each vibration identifiers. In this case, the electronic device 100 determines that the local storage space stores 7 vibration identifiers and drive waveform data corresponding to each vibration identifier, where the vibration identifier 1 and the drive waveform data 1 corresponding to the vibration identifier 1 are not included, as shown in Table 5.

**Table 5**

| | |
|---|---|
| Vibration identifier 2 | Drive waveform data 2 |
| Vibration identifier 3 | Drive waveform data 3 |
| Vibration identifier 4 | Drive waveform data 4 |
| Vibration identifier 5 | Drive waveform data 5 |
| Vibration identifier 6 | Drive waveform data 6 |
| Vibration identifier 7 | Drive waveform data 7 |
| Vibration identifier 8 | Drive waveform data 8 |

It may be learned from Table 5 that, in this case, the local storage space of the electronic device 100 stores the vibration identifier 2 corresponding to the vibration description file 2 and the drive waveform data 2 corresponding to the vibration identifier 2, the vibration identifier 3 corresponding to the vibration description file 3 and the drive waveform data 3 corresponding to the vibration identifier 3, the vibration identifier 4 corresponding to the vibration description file 4 and the drive waveform data 4 corresponding to the vibration identifier 4, the vibration identifier 5 corresponding to the vibration description file 5 and the drive waveform data 5 corresponding to the vibration identifier 5, the vibration identifier 6 corresponding to the vibration description file 6 and the drive waveform data 6 corresponding to the vibration identifier 6, the vibration identifier 7 corresponding to the vibration description file 7 and the drive waveform data 7 corresponding to the vibration identifier 7, the vibration identifier 8 corresponding to the vibration description file 8 and the drive waveform data 8 corresponding to the vibration identifier 8.

Then, the foregoing vibration description file 1 shown in Table 1 is used as an example, and the electronic device 100 may generate the drive waveform data 1 based on the vibration description file 1.

S308: The electronic device 100 stores the vibration identifier 1, the drive waveform data 1, and a mapping relationship between the vibration identifier 1 and the drive waveform data 1.

For example, the electronic device 100 may store the vibration identifier 1, the drive waveform data 1 corresponding to the vibration description file 1, and the mapping relationship between the vibration identifier 1 and the drive waveform data 1 in the local storage space shown in Table 5, as shown in Table 6.

**Table 6**

| | |
|---|---|
| Vibration identifier 2 | Drive waveform data 2 |
| Vibration identifier 3 | Drive waveform data 3 |
| Vibration identifier 4 | Drive waveform data 4 |
| Vibration identifier 5 | Drive waveform data 5 |
| Vibration identifier 6 | Drive waveform data 6 |
| Vibration identifier 7 | Drive waveform data 7 |
| Vibration identifier 8 | Drive waveform data 8 |
| Vibration identifier 1 | Drive waveform data 1 |

S309: The electronic device 100 drives, based on the drive waveform data 1, the motor to output the corresponding vibration response.

S310: When the electronic device 100 determines that a quantity of the vibration identifiers stored in the local storage space is equal to a specified quantity (which may also be referred to as a first quantity, for example, 10), the electronic device 100 may clear, based on a specified rule (for example, in a storage time sequence order or in ascending order of invocation frequency), a preset quantity (for example, one) of the vibration identifiers and the corresponding drive waveform data.

For example, an example in which the specified quantity is 10 is used. If the quantity of the vibration identifiers stored in the local storage space is equal to 10, the electronic device 100 may clear, from the local storage space, second drive waveform data with a lowest invocation frequency, and a second vibration identifier corresponding to the second drive waveform data.

S311: The electronic device 100 generates the corresponding drive waveform data 1 based on the vibration description file 1.

S312: The electronic device 100 stores the vibration identifier 1, the drive waveform data 1, and the mapping relationship between the vibration identifier 1 and the drive waveform data 1 in the local storage space.

S313: The electronic device 100 drives, based on the drive waveform data 1, the motor to output the corresponding vibration response.

It should be noted that some steps in the foregoing embodiment are optional. For example, in step S303, that the electronic device 100 determines that the total vibration duration of the vibration description file 1 is greater than the preset duration 1 is optional, and the electronic device 100 may skip determining whether the total vibration duration of the vibration description file 1 is greater than the preset duration 1, but directly determines, based on the vibration identifier 1, whether the drive waveform data 1 corresponding to the vibration identifier 1 is stored in local storage space. This application sets no limitation thereto.

In some embodiments, the electronic device 100 may determine two or more vibration identifiers based on two or more vibration description files. The electronic device 100 may obtain, from the local storage space, two or more pieces of corresponding drive waveform data based on the two or more vibration identifiers. Then, the electronic device 100 may drive the motor to simultaneously output the two or more pieces of drive waveform data; or the electronic device 100 drives the motor to output, from the two or more pieces of drive waveform data, drive waveform data with longest vibration duration.

For example, the drive waveform data 1 and the drive waveform data 2 are stored in the local storage space of the electronic device 100, and vibration duration of the drive waveform data 1 is greater than vibration duration of the drive waveform data 2. The electronic device 100 may obtain, the vibration description file 1 and the vibration description file 2 by using the identified specified scenario and/or the input performed by the user on the specified control. Then, the electronic device 100 may determine the vibration identifier 1 based on the vibration description file 1, and determine the vibration identifier 2 based on the vibration description file 2. The electronic device 100 may obtain, from the local storage space and based on the vibration identifier 1, the drive waveform data 1 corresponding to the vibration identifier 1, and obtain, from the local storage space and based on the vibration identifier 2, the drive waveform data 2 corresponding to the vibration identifier 2. The electronic device 100 may drive the motor to simultaneously output the drive waveform data 1 and the drive waveform data 2; or when the electronic device 100 determines that the vibration duration of the drive waveform data 1 is greater than the vibration duration of the drive waveform data 2, the electronic device 100 may drive the motor to output the drive waveform data 1.

In some embodiments, when the electronic device 100 determines that the total duration of the vibration description file 1 is less than the preset duration 1 (for example, 100 milliseconds), the electronic device 100 may generate the corresponding drive waveform data 1 based on the vibration description file 1,. Then, the electronic device 100 outputs, by using the motor, the corresponding vibration response based on the drive waveform data 1.

In some embodiments, the electronic device 100 may detect the drive waveform data in the local storage space based on a preset period (for example, 2 milliseconds). If within the preset duration 2 (for example, 100 milliseconds), the drive waveform data in the local storage space is not invoked or the drive waveform data in the local storage space is not updated, the electronic device 100 may clear the specified quantity (for example, 10) of the vibration identifiers and the drive waveform data corresponding to each vibration identifier.

In some embodiments, the vibration description file 1 may also include a corresponding vibration identifier set by the application. The vibration identifier may be the same as the vibration identifier 1, or may be different from the vibration identifier 1. When the vibration description file 1 includes the vibration identifier, the electronic device 100 may not need to calculate the vibration identifier 1 by using the specified algorithm (for example, the CRC32 algorithm or the MD5 algorithm) and one or more groups of vibration information in the vibration description file 1, but directly determines, based on the vibration identifier set by the application, whether corresponding drive waveform data exists in the local storage space of the electronic device 100. If the corresponding drive waveform data exists in the local storage space of the electronic device 100, the electronic device 100 drives, based on the drive waveform data, the motor to output a corresponding vibration response; or if the corresponding drive waveform data does not exist in the local storage space of the electronic device 100, the electronic device 100 generates the drive waveform data based on the vibration description file 1, stores the drive waveform data, the vibration identifier set by the application, and a mapping relationship between the drive waveform data and the vibration identifier set by the application in the local storage space, and drives, based on the drive waveform data, the motor to output a corresponding vibration response. This application sets no limitation thereto.

**The following describes a software architecture provided in an embodiment of this application.**

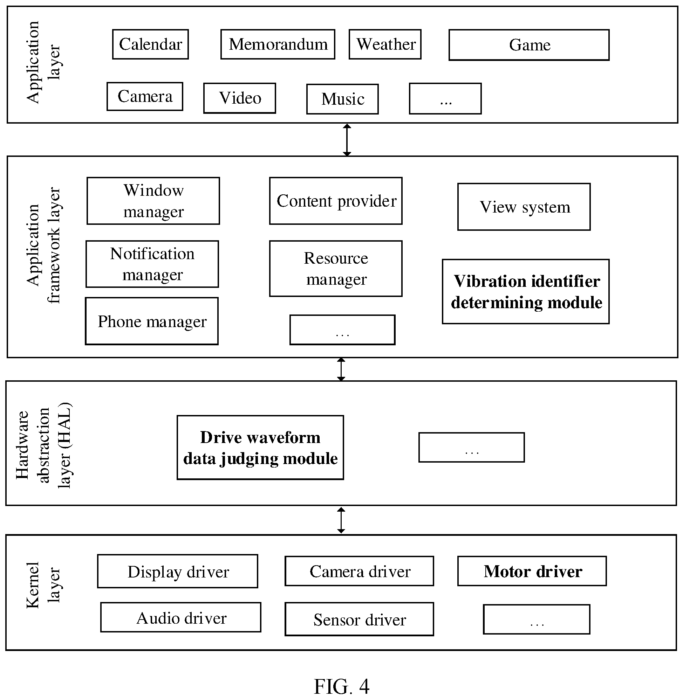

FIG. 4 shows a schematic diagram of an example of a software architecture according to an embodiment of this application.

As shown in FIG. 4, the software architecture of an electronic device 100 may be divided into an application layer, an application framework layer, a hardware abstraction layer, and a kernel layer.

The application layer may include a series of application packages.

As shown in FIG. 4, the application package may include a camera, a calendar, a memorandum, weather, a video application, a music application, a game application, and the like. The foregoing application in the embodiment shown in FIG. 3-FIG. 3B may be an application that can output a vibration response by using the electronic device 100, such as a video application, a music application, and a game application.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, a vibration identifier determining module, and the like.

The window manager is used to manage a window program. The window manager may obtain a display size, determine whether there is a status bar, lock a screen, take a screenshot, and the like.

The content provider is used to store and obtain data, and enables these data to be accessible to an application. The data may include videos, images, audio, calls that are made and answered, browsing histories and bookmarks, a phone book, and the like.

The view system includes visual controls, such as a control for displaying text and a control for displaying pictures. The view system may be used to build an application. The display interface may include one or more views. For example, a display interface including a short message service notification icon may include a view for displaying text and a view for displaying pictures.

The phone manager is used to provide communication functions of an electronic device 100, such as call state management (including connecting, hanging up, or the like).

The resource manager provides resources for applications such as a localized string, an icon, a picture, a layout file, and a video file.

The notification manager enables an application to display notification information in the status bar, which can be used to convey a notification-type message, and can automatically disappear after a short stay without user interaction. For example, the notification manager is used for notifying download completion or as a message reminder. The notification manager may alternatively be a notification that appears in the status bar at the top of the system in the form of a chart or scroll bar text, such as a notification for an application running in the background, or a notification that appear on the screen in the form of a dialog window. For example, text information is displayed in the status bar, a prompt tone is made, the electronic device vibrates, and an indicator lamp flashes.

The vibration identifier determining module may determine, based on a vibration description file 1 delivered from an application of the application layer, a vibration identifier 1 corresponding to the vibration description file 1. For this process, refer to the foregoing description of step S302 in the embodiment shown in FIG. 3-FIG. 3B. Details are not described herein again. In some embodiments, the vibration identifier determining module may also determine, based on a vibration identifier that is set by an application and that is in a vibration description file 1, a vibration identifier corresponding to the vibration description file 1.

The hardware abstraction layer may include a drive waveform data judging module. The drive waveform data module may receive a vibration identifier 1 delivered by the application framework layer, and determine, based on the vibration identifier 1, whether corresponding drive waveform data 1 exists in local storage space. For this process, refer to the foregoing descriptions of step S303 to step S305 or step S306 to step S309 in the embodiment shown in FIG. 3-FIG. 3B. Details are not described herein again.

The kernel layer may include a display driver, a camera driver, an audio driver, a sensor driver, a motor driver, and the like. The motor driver may receive drive waveform data 1 delivered by the drive waveform data judging module, and drive, based on the drive waveform data 1, a motor in a hardware layer to output a corresponding vibration response.

In some embodiments, the drive waveform data judging module may exist at the kernel layer. This application sets no limitation thereto.

As used in the foregoing embodiments, depending on the context, the term "when" can be interpreted as "if...", "after...", "in response to determining that...", or "in response to detecting that..." Similarly, depending on the context, the phrase "when it is determined that..." or "if it is detected that... (a stated condition or event)" can be interpreted as "if it is determined that...", "in response to determining that...", "when it is detected that... (the stated condition or event)", or "in response to detecting that... (the stated condition or event)".

All or some of the foregoing embodiments may be implemented by software, hardware, or a combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are completely or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in the embodiments may be implemented by a computer program instructing relevant hardware. The program may be stored in a computer readable storage medium. When the program is executed, the processes in the foregoing method embodiments are performed. The foregoing storage medium includes any medium that can store program code, such as a ROM, a random storage memory RAM, a magnetic disk, or an optical disc.

## Claims

1. A vibration output method, comprising:
obtaining, by an electronic device, a first vibration description file of an application;
determining, by the electronic device, a first vibration identifier based on the first vibration description file; and
when the electronic device determines, based on the first vibration identifier, that first drive waveform data corresponding to the first vibration identifier is stored in local storage space, driving, by the electronic device based on the first drive waveform data, a motor to output a first vibration response.

2. The method according to claim 1, wherein the method further comprises:
when the electronic device determines, based on the first vibration identifier, that the first drive waveform data does not exist in the local storage space, generating, by the electronic device, the first drive waveform data based on the first vibration description file;
storing, by the electronic device, the first vibration identifier and the first drive waveform data in the local storage space; and
driving, by the electronic device based on the first drive waveform data, the motor to output the first vibration response.

3. The method according to claim 2, wherein the storing, by the electronic device, the first vibration identifier and the first drive waveform data in the local storage space specifically comprises:
when the electronic device determines that a quantity of drive waveform data stored in the local storage space is less than a first quantity, storing, by the electronic device, the first vibration identifier and the first drive waveform data in the local storage space.

4. The method according to claim 2, wherein the storing, by the electronic device, the first vibration identifier and the first drive waveform data specifically comprises:
when the electronic device determines that a quantity of drive waveform data stored in the local storage space is equal to a first quantity, clearing, by the electronic device and from the drive waveform data stored in the local storage space, second drive waveform data and a second vibration identifier corresponding to the second drive waveform data; and
storing, by the electronic device, the first vibration identifier and the first drive waveform data in the local storage space.

5. The method according to claim 1, wherein the first vibration description file comprises total vibration duration of the first vibration response; and
before the electronic device determines, based on the first vibration identifier, that the first drive waveform data corresponding to the first vibration identifier is stored in the local storage space, the method comprises:
when the electronic device determines that the total vibration duration of the first vibration response is greater than first preset duration, determining, by the electronic device based on the first vibration identifier, whether the first drive waveform data is stored in the local storage space.

6. The method according to claim 1, wherein the determining, by the electronic device based on the first vibration description file, the first vibration identifier corresponding to the first vibration description file specifically comprises:
the first vibration description file comprises one or more vibration frequencies and vibration duration corresponding to each vibration frequency; and
calculating, by the electronic device, the first vibration identifier corresponding to the first vibration description file based on a first algorithm, the one or more vibration frequencies, and the vibration duration corresponding to each vibration frequency.

7. The method according to claim 1, wherein the first vibration description file comprises the first vibration identifier; and the determining, by the electronic device, based on the first vibration description file, the first vibration identifier corresponding to the first vibration description file specifically comprises:
obtaining, by the electronic device, the first vibration identifier from the first vibration description file.

8. The method according to claim 4, wherein the second drive waveform data is drive waveform data with a lowest invocation frequency in the local storage space.

9. The method according to claim 4, wherein the second drive waveform data is first stored drive waveform data in the local storage space.

10. The method according to claim 1, wherein the local storage space is an operating memory and/or a disk in the electronic device.

11. The method according to claim 1, wherein the first vibration identifier is a vibration identifier corresponding to the first vibration description file.

12. An electronic device, comprising one or more processors, one or more memories, a motor, and a transceiver, wherein the one or more memories are coupled to the one or more processors, the one or more memories are configured to store computer program code, and the computer program code comprises a computer instruction; and when the one or more processors execute the computer instruction, the electronic device is enabled to perform the method according to any one of claims 1 to 11.

13. A computer readable storage medium, comprising a computer instruction, wherein when the computer instruction is run by an electronic device, the electronic device is enabled to perform the method according to any one of claims 1 to 11.

14. A computer program product, wherein when the computer program product is run by an electronic device, the electronic device is enabled to perform the method according to any one of claims 1 to 11.
